# EUROPEAN PATENT APPLICATION

(11) **EP 3 166 343 A1**
(43) Date of publication of application: **10.05.2017**
(21) Application number: 15893544.5
(22) Date of filing: 30.11.2015
(51) Int. Cl.: H04W 4/06, H04N 21/436, G11B 27/10

(54) **AUDIO PLAYING METHOD AND APPARATUS FOR MULTIPLE PLAYING DEVICES**

(30) Priority: 02.09.2015 CN 201510560215
(71) Applicant: Guangdong Oppo Mobile Telecommunications Corp., Ltd., Dongguan, Guangdong 523860 (CN)
(72) Inventor: LIN, Shangbo, Dongguan Guangdong 523860 (CN)
(74) Representative: Johnson, Richard Alan
(86) International application number: PCT/CN2015/096074
(87) International publication number: WO 2017/035968

(57) **Abstract**

The present disclosure provides an audio playing method and system for multiple playing devices. The method comprises: establishing a Bluetooth connection between a playing device and a terminal according to a connection request sent by the terminal; determining a playing group that the playing device belongs to according to play group information stored in the playing device; and receiving audio data sent by the terminal and syncing the audio data to other playing devices of the playing group, whereby all playing devices of the playing group will play the audio data synchronously. When a playing device of a music system received audio data via Bluetooth, some playing devices in the music system can be coordinated to process the audio data, and the listening experience of the user can be improved.

## Description

### CROSS REFERENCE TO RELATED APPLICATIONS

This application claims the priority based on Chinese patent application No.201510560215.3 by Guang Dong OPPO Mobile Telecommunications Co., Ltd., filed on September 2, 2015, and entitled "AUDIO PLAYING METHOD AND APPARATUS FOR MUTIPLE PLAYING DEVICES", which disclosure is herein incorporated by reference.

### TECHNICAL FIELD

The present disclosure relates to audio playing technology, and particularly to an audio playing method and apparatus for multiple playing devices.

### BACKGROUND

With the development of multimedia technology, a music system including more than one playing device is becoming more and more popular to consumers. In such a music system, a plurality of playing devices is connected to a private network in a wireless manner (e.g., an industrial standard such as IEEE802.11). This kind of private network provides an Internet Oriented export, which can be connected to one or more routers in connection with the Internet, whereby playing devices of a private network can access network music resources. After installing dedicated application software, terminals (such as smart phone, tablet, or personal computer, etc.) can access and manage the playing devices of the private network through the export, such as increasing or decreasing devices, searching for music, creating a playlist, and controlling various playing status.

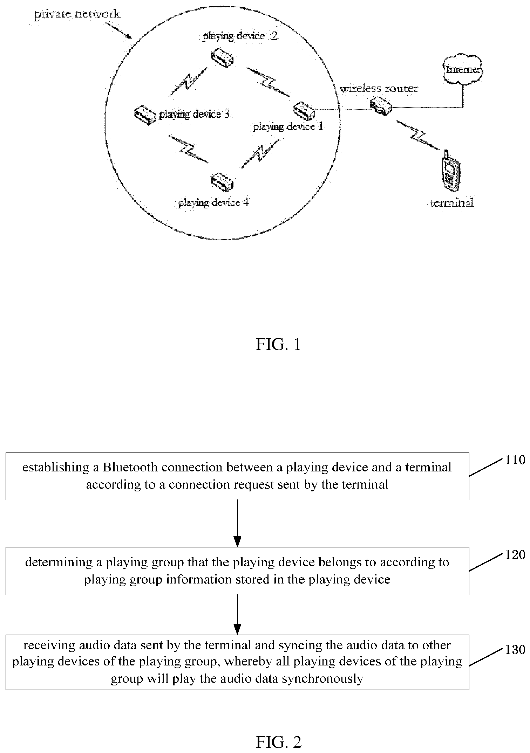

Currently, the entire music system can operate as a playing group, in other words, all playing devices of the music system can play the same song synchronously. As illustrated in FIG.1, Playing Device 1, Playing Device 2, Playing Device 3, and Playing Device 4 forms a music system and a communication connection is established among them in a wireless manner. Playing Device 1 establishes a wired or wireless connection to a wireless router which in turn connects with the Internet and LAN (Local Area Network). Playing Device 1 is a master device of the music system while other playing devices are slave devices. After connecting to the wireless router, a terminal has dedicated application installed can access and control the playing devices of the private network of the music system via the application. The terminal will send information of a song which is desired to be played and selected by a user to play Device 1, the information of the song can be name of the song, a storage location of the song on a network music server, or URL (Uniform Resource Locator). Playing Device 1 can connect to the network music server according to the information of the song and further download and decode audio data of the song. Not only being played at Playing Device 1, the decoded audio data will also be sent to play Device 2, Playing Device 3, and Playing Device 4 of the private network, whereby all of the four playing devices in the group will play the song synchronously.

In addition, playing devices of a music system can be divided into several Playing Groups for playing different music respectively. For example, in a music system, there are six playing devices, i.e., Playing Devices A, B, C, D, E, and F, among which Playing Devices A and B form Playing Group 1, Playing Devices C and D form Playing Group 2, and Playing Devices E and F form Playing Group 3. Playing Devices A and B in Playing Group 1 play the same song synchronously, Playing Devices C and D in Playing Group 2 play the same song synchronously, and Playing Devices E and F in Playing Group 3 play the same song synchronously. However, Playing Group 1, Group 2, and Group 3 are independent of each other and they can play the same or different songs. Each playing group can be controlled by the same or different users.

Currently, in addition to the above-described manner of acquiring the audio data via the wireless router, a playing device of the music system can also obtain the audio data from the terminal via Bluetooth either. For example, a terminal outside the music system can establish a Bluetooth connection with any playing device of the music system and send audio data to the connected playing device via Bluetooth. However, as to the audio data acquired in this way, the operation of other playing devices except for the connected playing device in the music system cannot be determined. That is to say, it is unable to determine whether the audio data will be played by the connected playing device only, by more than one playing device, or by all of the playing devices of the music system, thereby affecting user listening experience.

### SUMMARY

The present disclosure provides an audio playing method and apparatus for multiple playing devices, such that playing devices of a music system can be coordinated to process audio data acquired via Bluetooth, whereby user listening experience can be improved.

According to the first aspect of the present disclosure, it is provided an audio playing method for multiple playing devices. The method includes:
establishing a Bluetooth connection between a playing device and a terminal according to a connection request sent by the terminal;
determining a playing group that the playing device belongs to according to play group information stored in the playing device; and
receiving audio data sent by the terminal and syncing the audio data to other playing devices of the playing group, whereby all playing devices of the playing group will play the audio data synchronously.

According to the second aspect of the present disclosure, it is provided an audio playing apparatus for multiple playing devices. The apparatus includes:
a Bluetooth connecting unit, configured to establish a Bluetooth connection between a playing device and a terminal according to a connection request sent by the terminal;
a playing group determining unit, configured to determine a playing group that the playing device belongs to according to play group information stored in the playing device; and
an audio data playing unit, configured to receive audio data sent by the terminal and sync the audio data to other playing devices of the playing group, whereby all playing devices of the playing group will play the audio data synchronously.

According to the third aspect of the present disclosure, it is provided a storage medium storing application programs, when executed on a data-processing apparatus, adapted to perform the audio playing method for multiple playing devices according to the first aspect of the present disclosure.

According to the fourth aspect of the present disclosure, it is provided an audio playing system for multiple playing devices, which includes the audio playing apparatus for multiple playing devices according to the second aspect of the present disclosure.

In the present disclosure, by establishing a Bluetooth connection between a playing device and a terminal according to a connection request sent by the terminal, determining a playing group that the playing device belongs to according to play group information stored in the playing device; and receiving audio data sent by the terminal and syncing the audio data to other playing devices of the playing group, all playing devices of the playing group will play the audio data synchronously. Therefore, the problem that it is unable for the playing device to determine whether to transmit the audio data to other playing devices upon receiving the audio data via Bluetooth is resolved; playing devices of a music system can be coordinated to process audio data acquired via Bluetooth, whereby user listening experience can be improved.

### BRIEF DESCRIPTION OF THE DRAWINGS

FIG. 1 is a schematic view illustrating a connection relationship between a music system and a terminal in the related art;
FIG. 2 is a flowchart illustrating an audio playing method for multiple playing devices according to a first embodiment of the present disclosure;
FIG. 3a is a flowchart illustrating an audio playing method for multiple playing devices according to a second embodiment of the present disclosure;
FIG. 3b is a structure schematic diagram illustrating a playing device involved in the audio playing method for multiple playing devices according to a second embodiment of the present disclosure; and
FIG 4 is a block diagram illustrating an audio playing apparatus for multiple playing devices according to a third embodiment of the present disclosure.

### DETAILED DESCRIPTION OF ILLUSTRATED EMBODIMENTS

The present disclosure will be described in detail below in conjunction with embodiments and accompanying drawings. It should be appreciated that specific embodiments described herein are for illustration only and are not intended for limitation of the present disclosure. It should also be noted that, for ease of description, only parts rather than all of the structures related to the present disclosure are illustrated in the accompanying drawings.

### First embodiment

FIG. 2 is a flowchart illustrating an audio playing method for multiple playing devices according to the first embodiment of the present disclosure. This embodiment is applicable to the situation where playing devices of a music system should be coordinated to process audio data acquired via Bluetooth. There can be an audio playing device arranged in each playing device of the multiple playing devices, and the method can be performed by the audio playing device(s). The method includes the following steps:
Step 110, a Bluetooth connection is established between a playing device and a terminal according to a connection request sent by the terminal.

The terminal has a Bluetooth unit and it can transmit, via Bluetooth, audio data downloaded or of its own to the playing device with which a connection has been established. For example, the terminal can be an audio device. The audio device can search playing devices that can be connected within a certain range via Bluetooth. If any playing device that can be connected is found, a connection request will be send thereto. The playing device being found will establish a Bluetooth connection with the terminal according to the connection request sent by the terminal.

Step 120, a playing group that the playing device belongs to is determined according to play group information stored in the playing device.

The playing group information includes playing group name, name of playing device included in the playing group, and Internet Protocol address (IP address) of playing device included in the playing group. The playing group information is stored in each playing device of the playing group; the playing device can determine whether it belongs to any playing group and which playing group it belongs to by querying playing information stored by the playing device itself. For example, the playing group information stored in the playing device is inquired; it is determined that the playing device does not belong to any playing group if the playing group information does not include "playing group name"; otherwise, it is determined that the playing device belongs to a playing group corresponding to "playing group name" if "playing group name" is included in the playing group information.

Step 130, audio data sent by the terminal is received and synced to other playing devices of the playing group, whereby all playing devices of the playing group will play the audio data synchronously.

The terminal establishes a Bluetooth connection with a playing device and sends audio data to it via Bluetooth. The playing device receives the audio data and determines the playing group it belongs to according to play group information stored by the playing device itself. The playing device can sync the audio data received to other playing devices of the playing group according to the IP address of the other playing devices, whereby all playing devices of the playing group can play the audio data synchronously.

If the playing device does not belong to any playing group, the playing device will play the audio data individually.

With the aid of the technical scheme of the embodiment of the present disclosure, by establishing a Bluetooth connection between a playing device and a terminal according to a connection request sent by the terminal, determining a playing group that the playing device belongs to according to play group information stored in the playing device; and receiving audio data sent by the terminal and syncing the audio data to other playing devices of the playing group, all playing devices of the playing group will play the audio data synchronously. Therefore, the problem that it is unable for the playing device to determine whether to transmit the audio data to other playing devices upon receiving the audio data via Bluetooth is resolved; playing devices of a music system can be coordinated to process audio data acquired via Bluetooth, whereby user listening experience can be improved.

Based on the above technical scheme, before determining the playing group that the playing device belongs to according to the playing group information stored in the playing device, the method can further include: grouping operation is performed on a music system in which a plurality of playing devices are included, and storing the playing group information in each playing device included in a playing group corresponding to the playing group information. In such a manner, personalized audio file playing demand of the user can be met by grouping the music system according to actual needs of the user.

### Second Embodiment

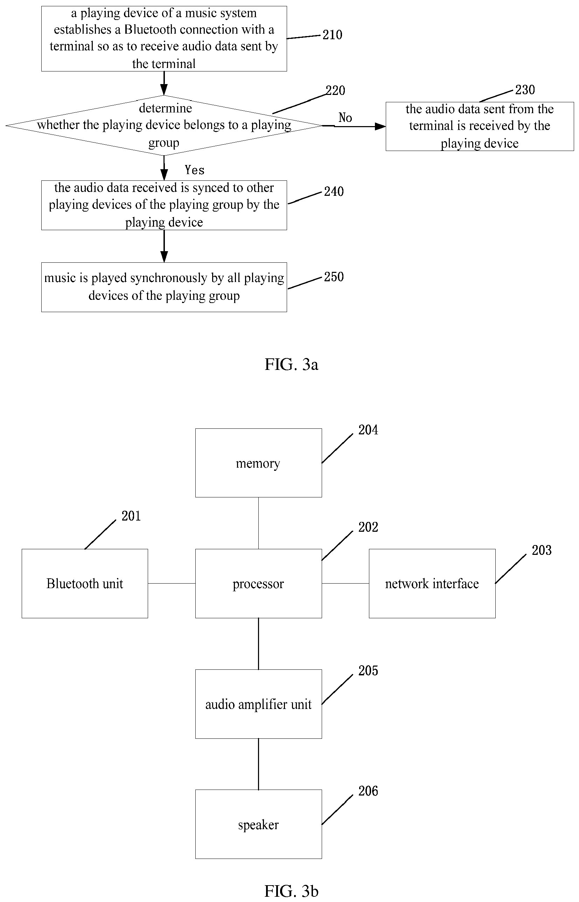

FIG. 3a is a flowchart illustrating an audio playing method for multiple playing devices according to the second embodiment of the present disclosure. The method includes the following steps:
Step 210, a playing device of a music system establishes a Bluetooth connection with a terminal so as to receive audio data sent by the terminal.

As illustrated in FIG. 3b, the playing device includes a processor 202, a Bluetooth unit 201, a network interface 203, an audio amplifier unit 205, a speaker 206, and a memory 204. The Bluetooth unit 201 is configured to realize Bluetooth communication, whereby the playing device can establish a Bluetooth connection with a terminal (such as a smart phone) equipped with Bluetooth function via Bluetooth. The playing device can acquire audio data and/or control data via Bluetooth. The Bluetooth unit 201 can transmit the audio data and/or control data acquired to the processor 202. Thereafter, the processor 202 can send, via the Bluetooth unit 201, the audio data and/or control data to other devices equipped with a Bluetooth unit 201. The processor 202 is the core of the playing device; it can execute a control program and communicate with various peripheral function units as well as coordinate and control each unit. The network interface 203 can be a wired network interface or a wireless network interface in line with 802.11 standards. The processor 202 can be coupled to the Internet via the network interface 203 so as to acquire network streaming media audio data. Multiple playing devices can form a private network of a wireless music system via the network interface 203, and synchronized music playing can be achieved. Normally, the terminal can connect to the music system through a wireless network (e.g., WIFI) and control the music system as well as playing devices of the music system. The processor 202 performs decoding and/or D/A (digital-analog) conversion on the audio data acquired, and sends the converted analog audio signal to the audio amplifier unit 205; the audio amplifier unit 205 in turn perform power amplification on the analog audio signal sent by the processor 202 so as to drive the speaker 206. Sound is restored and played by the speaker 206 upon receiving the analog audio signal sent by the audio amplifier unit 205, and in practice, there can be one or more speakers 206. The memory 204 is configured to store programs executed by the processor 202 as well as configuration data of the music system, such as network connection data, volume information, grouping information, and playlist.

The playing device of the music system establishes a Bluetooth connection with the terminal and receives audio data sent by the terminal via the Bluetooth unit 201.

Step 220, it is determined that whether the playing device belongs to a playing group; proceed to step 230 if the playing device does not belong to any playing group, otherwise, proceed to step 240 if the playing device belongs to a playing group.

Upon receiving the audio data sent by the terminal via Bluetooth, the playing device will query grouping information stored in the memory 204 so as to determine whether it belongs to any playing group; proceed to step 230 if the playing device does not belong to any playing group, otherwise, proceed to step 240.

Step 230, the audio data sent from the terminal is received by the playing device.

If the playing device does not belong to any playing group, the processor 202 of the playing device will perform decoding and/or D/A (digital-analog) conversion on the audio data acquired, and send the converted analog audio signal to the audio amplifier unit 205, which will in turn perform power amplification on the analog audio signal sent by the processor 202 so as to drive the speaker 206. The speaker 206 can restore and play the audio data after receiving the analog audio signal sent by the audio amplifier unit 205.

In step 240, the audio data received is synced to other playing devices of the playing group by the playing device.

If the playing device belongs to a playing group, the playing device can send the audio data received to other playing devices of the playing group according to the Internet Protocol address (IP address) of the other playing devices.

Step 250, music is played synchronously by all playing devices of the playing group.

With regard to any playing device in the playing group, through the processor 202, decoding and/or D/A (digital to analog) conversion can be performed on the audio data acquired; the converted analog audio signal will be send to the audio amplifier unit 205 such that the audio amplifier unit 205 can perform power amplification on the analog audio signal sent by the processor 202 in order to drive the speaker 206 to make it sound. The analog audio signal sent by the audio amplifier unit 205 will be restored and played by the speaker 206 upon reception thereof, and synchronized music playing of all playing devices of the playing group can be achieved.

### Third Embodiment

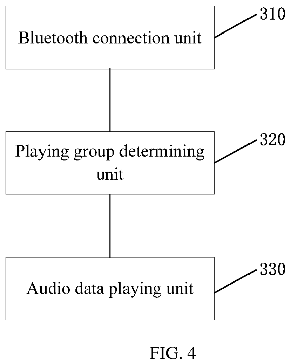

FIG 4 is a block diagram illustrating an audio playing apparatus for multiple playing devices according to a third embodiment of the present disclosure. The apparatus includes:
a Bluetooth connecting unit 310, configured to establish a Bluetooth connection between a playing device and a terminal according to a connection request sent by the terminal;
a playing group determining unit 320, configured to determine a playing group that the playing device belongs to according to play group information stored in the playing device; and
an audio data playing unit 330, configured to receive audio data sent by the terminal and sync the audio data to other playing devices of the playing group, whereby all playing devices of the playing group will play the audio data synchronously.

In this technical scheme, the Bluetooth connecting unit 310 establishes a Bluetooth connection between a playing device and a terminal according to a connection request sent by the terminal, the playing group determining unit 320 determines a playing group that the playing device belongs to according to play group information stored in the playing device; the audio data playing unit 330 receives audio data sent by the terminal and syncs the audio data to other playing devices of the playing group, whereby all playing devices of the playing group can play the audio data synchronously. Therefore, the problem that it is unable for the playing device to determine whether to transmit the audio data to other playing devices upon receiving the audio data via Bluetooth is resolved; playing devices of a music system can be coordinated to process audio data acquired via Bluetooth, whereby user listening experience can be improved.

The apparatus further includes a grouping unit, which is configured to perform grouping operation on the music system in which multiple playing devices are included and store playing group information in the playing devices included in a playing group corresponding to the grouping information, before determining the playing group that the playing device belongs to according to the playing group information stored in the playing device.

The playing group information includes playing group name, name of playing device included in the playing group, and Internet Protocol address (IP address) of playing device included in the playing group.

Additionally, the playing group determining unit 320 is configured to:
inquire the playing group information stored in the playing device;
determine that the playing device does not belong to any playing group if the playing group information does not include "playing group name"; and
determine that the playing device belongs to a playing group corresponding to "playing group name" if the playing group information includes "playing group name".

The apparatus further includes a separate playing unit, which is configured to play the audio data via the playing device individually if the playing device does not belong to any playing group.

The audio playing apparatus for multiple playing devices described above, which has corresponding function units capable of performing methods and obtaining corresponding advantages, can be configured to perform the audio playing method for multiple playing devices according to any embodiment of the present disclosure.

In order to implement the embodiments described above, it is provided a storage medium storing application programs, when executed on a data-processing apparatus, adapted to perform the audio playing method for multiple playing devices according to any embodiment of the present disclosure.

In order to implement the embodiments described above, it is further provided an audio playing system for multiple playing devices, which includes the audio playing apparatus for multiple playing devices according to the embodiment of the present disclosure.

The foregoing description is merely explanation of embodiments rather than limitation of the present disclosure. For those skilled in the art, various modifications and alterations can be made to the present disclosure. Any modification, equivalent substitution, improvement or the like made within the spirit and principle of the present disclosure shall fall into the protection scope of the present disclosure.

## Claims

1. An audio playing method for multiple playing devices, comprising:
establishing a Bluetooth connection between a playing device and a terminal according to a connection request sent by the terminal;
determining a playing group that the playing device belongs to according to play group information stored in the playing device; and
receiving audio data sent by the terminal and syncing the audio data to other playing devices of the playing group, whereby all playing devices of the playing group will play the audio data synchronously.

2. The method of claim 1, wherein before determining the playing group that the playing device belongs to according to the playing group information stored in the playing device, the method further comprises:
performing grouping operation on a music system comprising a plurality of playing devices, and storing the playing group information in each playing device comprised in a playing group correspondingly.

3. The method of claim 1, wherein the playing group information comprises playing group name, name of playing device comprised in the playing group, and Internet Protocol address (IP address) of playing device comprised in the playing group.

4. The method of claim 3, wherein before determining the playing group that the playing device belongs to according to play group information stored in the playing device, the method further comprises:
inquiring the playing group information stored in the playing device;
determining that the playing device does not belong to any playing group if the playing group information does not comprise the playing group name; and
determining that the playing device belongs to a playing group corresponding to the playing group name if the playing group information comprises the playing group name.

5. The method of any of claims 1-4, further comprising:
playing the audio data via the playing device individually if the playing device does not belong to any playing group.

6. An audio playing apparatus for multiple playing devices, comprising:
a Bluetooth connecting unit, configured to establish a Bluetooth connection between a playing device and a terminal according to a connection request sent by the terminal;
a playing group determining unit, configured to determine a playing group that the playing device belongs to according to play group information stored in the playing device; and
an audio data playing unit, configured to receive audio data sent by the terminal and sync the audio data to other playing devices of the playing group, whereby all playing devices of the playing group will play the audio data synchronously.

7. The apparatus of claim 6, further comprising:
a grouping unit, configured to perform grouping operation on a music system comprising a plurality of playing devices and store the playing group information in each playing device comprised in a playing group correspondingly, before determining the playing group that the playing device belongs to according to play group information stored in the playing device.

8. The apparatus of claim 6, wherein the playing group information comprises playing group name, name of playing device comprised in the playing group, and Internet Protocol address (IP address) of playing device comprised in the playing group.

9. The apparatus of claim 8, wherein the playing group determining unit is configured to:
inquire the playing group information stored in the playing device;
determine that the playing device does not belong to any playing group if the playing group information does not comprise the playing group name; and
determine that the playing device belongs to a playing group corresponding to the playing group name if the playing group information comprises the playing group name.

10. The apparatus of any of claims 6-9, further comprising:
a separate playing unit, configured to play the audio data via the playing device individually if the playing device does not belong to any playing group.

11. A storage medium comprising application programs, wherein the application programs are adapted to perform the audio playing method for multiple playing devices of any of claims 1-5.

12. An audio playing system for multiple playing devices, comprising the audio playing apparatus for multiple playing devices of any of claims 6-10.
